# EUROPEAN PATENT APPLICATION

(11) **EP 0 960 775 A1**
(43) Date of publication of application: **01.12.1999**
(21) Application number: 98830325.1
(22) Date of filing: 27.05.1998
(51) Int. Cl.: B60Q 1/52, G05D 1/03

(54) **Device for a vehicle to recognise and signal the imminence of a departure from the roadbed by the vehicle during its travel**

(71) Applicant: Martinello, Settimo, I-39057 S.Michele Appiano (BZ) (IT)
(72) Inventor: Martinello, Settimo, I-39057 S.Michele Appiano (BZ) (IT)
(74) Representative: Ghioni, Carlo Raoul Maria

(57) **Abstract**

Device for a vehicle, to recognise and signal the imminence of a departure from the roadbed by the vehicle during its travel detecting that fact that the vehicle is in the process of crossing over or has just crossed over a line (1) delimiting the side of a road lane. It comprises an optical sensor (2) and a processing and control unit (5).

The optical sensor (2) with three receivers (7,8,8a) measures the intensity of reflection of the electromagnetic waves reflected by the surface of three associated respective portions (3,4,4a) and emits electrical signals proportional to the measured values of intensity of reflection. The unit (5) receives the electrical signals emitted by the optical sensor (2) and processes them to determine the difference between the intensities of reflection measured for the surfaces of each pair of portions.

Two (4) and (4a) of the portions are mutually aligned along a direction transverse to the direction of vehicle travel, whilst the other one (3) is offset. The unit (5) compares each result obtained with a pre-set threshold value and, if that threshold value is exceeded, it activates an alarm element (6) so it emits an alarm signal.

## Description

The present invention relates to a device for a vehicle, to recognise and signal the imminence of a departure from the roadbed during its travel, according to the preamble to claim 1.

Such a device is known from the document DE 33 00 086 A1.

More specifically this device belongs to that set of vehicle accessories which concur in improving the travelling safety of vehicles and which allow in particular to recognise and signal to the driver the approach of a dangerous situation, in this case the imminence of a departure from the roadbed by the vehicle.

The aforementioned known device comprises a sensor device to detect the fact that the vehicle is in the process of crossing over or has just crossed over a lateral delimitation line of a road lane, in which case an alarm signal is emitted.

The fact that the vehicle is over a lateral delimitation line of the lane, which may be the lateral delimitation line of an emergency lane or even of the edge of the road, is certainly an anomalous situation which may lead to a departure from the road bed and which always takes place before a road bed departure and as such can be taken as a typical situation for reference.

For this purpose the sensor device comprises two receivers, positioned aligned along a direction transverse to that of the vehicle travel, which receive the light reflected by the road surface and respectively by the lateral lane delimitation line and emit different signals according to the different reflection resulting from the road surface and respectively from the lateral delimitation line.

Based on the fact that a lateral delimitation line always presents a light colour, generally white or yellow, reflecting much more than the normal road surface, by comparing the signals emitted by the receiver it is possible to recognise the presence under the vehicle of a lateral delimitation line.

In that case the driver who, for instance out of sleepiness or distraction, is about to depart the road bed, promptly warned, can initiate appropriate actions to avoid this occurrence.

This known device, however, presents the drawback of lacking accuracy.

A series of disturbing effects exists, which take place only in particular situations and which may lead to a marked difference in reflection between two portions of road surface, so that the known device emits an alarm signal even though a lateral delimitation line has not actually been crossed. Some of these effects may be the presence of an isolated puddle or of a spot of paint or dirt on the road surface or the flash effect caused by a lamp post or by another vehicle.

Moreover, in some countries it is common for a part of the road signs to be written directly onto the road surface. It then occurs, in some particular situations of travel and with reference to some particular letters such as M, N or V, that the inclined parts of these letters may be mistaken for sections of the lane delimitation lines. This leads to an alarm indication when they are crossed.

From US Patent 5,318,143, a device is known for steering a vehicle along a guidance stripe along a road and to detect that guidance stripe.

For this purpose the device comprises a transmitter, which irradiates with radiation the road surface and the guidance stripe, first and second receivers, which receive the radiation reflected by a first and second portion of road surface positioned next to each other along a direction transverse to the direction of vehicle travel, and a processing unit, which is associated to said receivers to determine the difference between the intensities of the reflected radiation received by the two receivers. To each receiver is associated a photodiode to transform the received radiation intensity into an electrical signal, in particular a voltage differential, which can be processed by the processing unit.

The two portions of road surface whose reflection is measured partially overlap the guidance stripe, so that the reflected radiation also depends on the part of the guidancee stripe surface that belongs to each portion of road surface.

In the ideal position, i.e. the one wherein the vehicle is perfectly in line with the guidance stripe, the two portions shall reflect the same radiation intensity, since the two portions shall be identical. Conversely in the presence of a deviation from the ideal line, a portion shall overlap the guidance stripe to a greater extent and this shall be recognisable by the fact that the two radiation intensities shall no longer be identical.

With appropriate guidance means the vehicle is then steered back in position, thereby eliminating the difference in reflection between the two portions.

For this known device, however, it is necessary to provide a guidance stripe on the road.

US Patent 3,708,668 also relates to a device for steering a vehicle, but along a traditional road centre line. For this purpose the device comprises a plurality of photoelectric elements associated to a respective plurality of portions of road surface, all positioned next to each other along a direction transverse to that of vehicle travel. Of these portions only one, the central one, should overlap the road centre line in the ideal situation. This device, too, uses the differences between the various intensities of radiation reflected by the various portions to evaluate the displacement of the vehicle with respect to the ideal trajectory.

Object of the present invention is to improve a device for a vehicle, for recognising and signalling the imminence of a departure from the road bed by the vehicle, so that it behaves in a reliable manner and emits the alarm signal only when the transverse delimitation line is actually being crossed.

This object is attained by a device that presents the characteristics of claim 1.

The presence of the third portion of road surface, in an offset disposition with respect to the other two, greatly reduces the possibility of a false indication, i.e. one due to the aforementioned disturbing effects such as the presence of a letter, of an isolated puddle, of a coloured spot or of a flash effect. The disturbance would have to be very large in order simultaneously to involve at least two of the three road surface portions examined.

Additional features and advantages of the present invention shall become more readily apparent from the detailed description that follows of an embodiment, shown purely by way of non limiting indication in the accompanying drawings, wherein:
Figure 1 schematically shows a section transverse to the direction of travel through an optical sensor of an embodiment of the device according to the invention,
Figure 2 schematically shows a bottom view of the optical sensor in Figure 1,
Figure 3 schematically shows a block diagram of an embodiment of the device according to the invention.

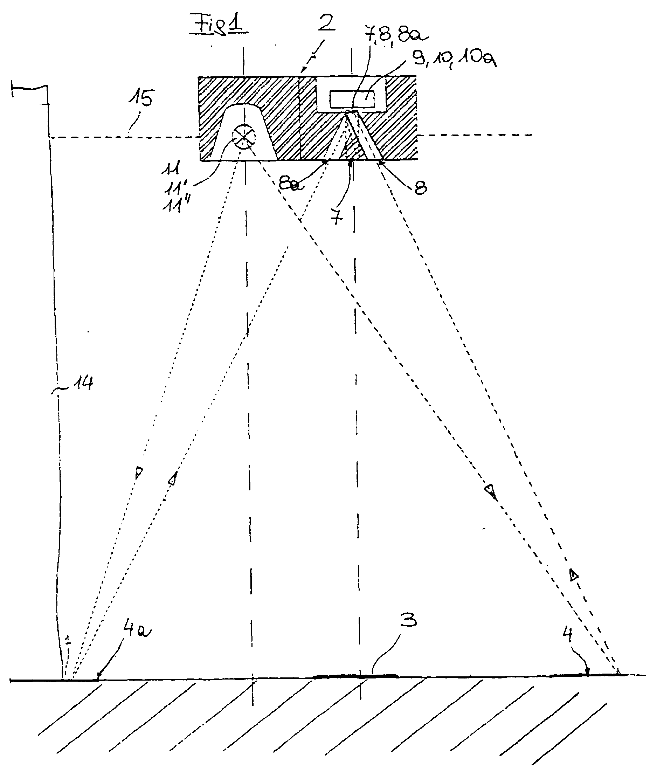

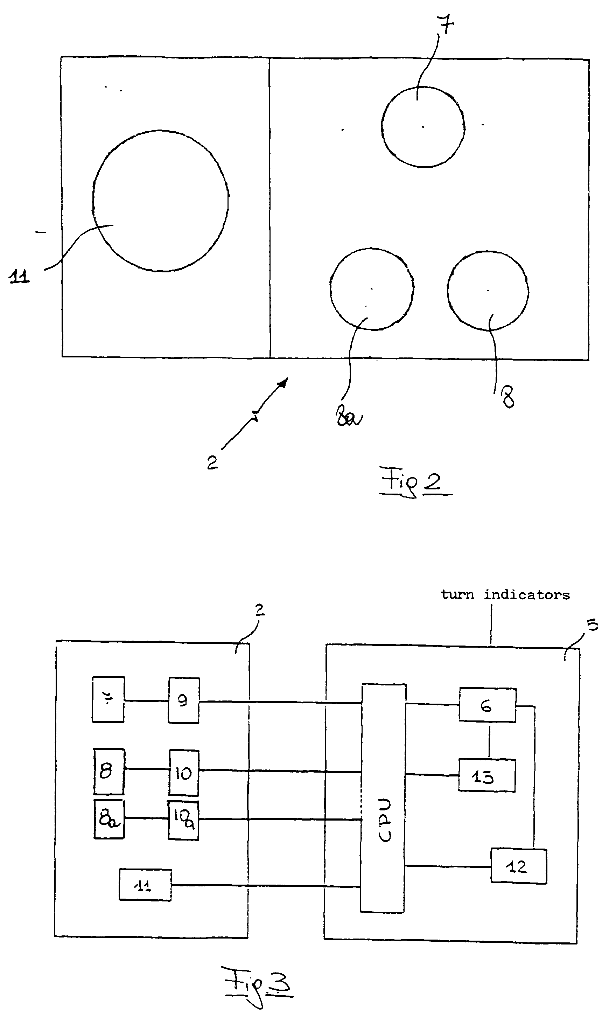

The device comprises an optical sensor 2 and a processing and control unit 5. The latter is conveniently housed in the dashboard of the vehicle.

The optical sensor 2 is applied in the lower part of the vehicle, so that it is aimed at the road surface.

Conveniently, the optical sensor 2 is positioned on the axle 15 of the wheels, in proximity to a wheel 14. In this way in addition to obtaining an adequate mechanical protection for the optical sensor 2, its constant height from the road surface to be explored is guaranteed as well.

As the figures show, the optical sensor 2 comprises three receivers 7,8,8a, which receive respectively the rays reflected by associated three portions 3,4,4a of road surface.

The optical axis of the first receiver 7 lies in the vertical plane identified by the direction of travel and forms a 15° angle with the vertical. The optical axes of the second 8 and of the third receiver 8a lie in the same vertical plane and extend symmetrically to each other forming each a 15° angle with the vertical plane identified by the direction of travel. In this way only two 4,4a of the three portions 3,4,4a are positioned along a direction transverse to the direction of travel, whilst the other one 3 is offset.

The optical sensor 2 further comprises three photodiodes 9, 10, 10a in operative contact with the respective receivers 7,8,8a. By means of such photodiodes 9,10,10a the optical sensor 2 emits electrical signals proportional to the values of radiation intensity measured by the three receivers 7,8,8a. Such electrical signals are in particular voltage differentials.

Such signals are transmitted, possibly amplified by an amplifier, to a processing and control unit 5 in operative contact with the optical sensor 2. It receives the electrical signals emitted by the optical sensor 2 and processes them to determine the difference between the radiation intensities measured for the surfaces of each pair of portions.

After processing such results, it compares them with a pre-set threshold value and, if two of the results exceed the threshold value, it activates the alarm element 6 so it emits an alarm signal for the driver of the vehicle.

The processing and control unit 5 comprises an adjusting element 12, able to be activated manually by the driver, to adjust the threshold value to be set. This expedient allows to make the measurement optimal, since the threshold value can be adapted to occasional circumstances.

Moreover, to avoid a needless indication of centre line crossing when passing another vehicle or making a turn, the operation of the turn indicators disables the alarm element 6, but not the device. It should be noted that an involuntary shift, i.e. one without turn indicator, of the vehicle into the passing lane, is also signalled at the moment the centre line is crossed, because at that moment a difference in radiation such as to trigger the alarm signal 6 is detected.

The alarm signal 6 can also be reset by means of a reset button, every time the lateral delimitation line 1 has been voluntarily crossed or other vehicles have been passed or the vehicle has made a turn without activating the turn indicator or in similar cases.

The term "radiation" is understood to mean electromagnetic waves. They can be visible, infrared or ultraviolet.

In the first case the optical sensor 2 conveniently comprises a lamp 11, i.e. a source of visible radiation, which illuminates the surfaces of the three portions 3,4,4a as the vehicle travels. In this case the receivers 7,8,8a measure the intensity of reflection of the radiation emitted by the lamp 11.

This allows to have a uniform illumination, regardless of the time of day or night and of weather conditions, of the various portions 3,4,4a of the road surface.

Instead of the lamp, a transmitter 11' of infrared electromagnetic waves can be provided. In this case the receivers 7,8,8a measure the intensity of reflection of the infrared radiation emitted by the transmitter 11'.

Alternatively, instead of the lamp a transmitter 11'' of ultraviolet electromagnetic waves can be provided. In the latter two cases, by limiting the spectrum of the reference radiation, the possibility of interference by external phenomena is reduced, since attention is focused only on specific radiation, easily recognisable and distinguishable.

It is also possible for one of the receivers to be fouled and not to receive properly any longer. To uncover such a situation, the device evaluates the maximum value among all values measured by the receiver in a time interval. Then, if one of the receivers fails to reach a value exceeding 70% of the maximum value four times in a row, it is not receiving properly, i.e. it is foul, and a malfunction signal is emitted.

With reference to the Figures, the operation of the device is as follows.

The receivers 7,8 and 8a of the optical sensor 2 measure the reflection respectively of the first portion 3, of the second portion 4 and of the third portion 4a. The photodiodes 9,10 and 10a transform the measured values of the receivers 7,8 and 8a into corresponding electrical signals, in particular into voltage differentials.

Such electrical signals are processed by the processing unit CPU, which computes the difference between the radiation intensity measured for the surfaces of each pair of portions obtainable coupling two of the three portions of road surface 3,4,4a, i.e. the pair of portions 3,4, the pair of portions 3,4a and the pair of portions 4,4a.

In the processing unit CPU is stored a threshold value, which can be varied by acting manually on the adjusting element 12.

If the comparison between each result and the set threshold value shows that the two results exceed the threshold value, the alarm element 6 is activated and it emits an alarm signal for the driver.

The present invention thus attains its object.

## Claims

1. Device for a vehicle, to recognise and signal the imminence of a departure from the road bed by the vehicle during its travel by detecting the fact that the vehicle is in the process of crossing over or has just crossed over a line (1) delimiting the side of a road lane, comprising:
an optical sensor (2), which measures with receivers the intensity of reflection of the electromagnetic waves reflected by the surface of respective associated portions of road surface and emits electrical signals proportional to the measured values of intensity of reflection;
a processing and control unit (5), which receives the electrical signals emitted by the optical sensor (2), processes them to determine the difference between the intensities of reflection measured for the surfaces of each pair of road surface portions, compares each result obtained with a pre-set threshold value and activates, if the threshold value is exceeded, an alarm element (6) so it emits an alarm signal for the driver of the vehicle, characterised in that it comprises three receivers (7,8,8a) and three associated road surface potions (3,4,4a), whereof two (4) and (4a) are mutually aligned along a direction transverse to the direction of vehicle travel, whilst the third one (3) is positioned offset with respect to that alignment line, the alarm element (6) being activated only when two of the results obtained exceed the threshold value.

2. Device according to claim 1, characterised in that the optical axis of the first receiver (7) lies in the vertical plane identified by the direction of travel and forms a 15° angle with the vertical and in that the optical axis of the second receiver (8) and the optical axis of the third receiver (8a) lie in the same vertical plane and extend symmetrically to one another, each forming a 15° angle with the vertical plane identified by the direction of travel.

3. Device according to claim 1 or 2, characterised in that said optical sensor (2) comprises three photodiodes (9,10,10a) respectively associated to the receivers (7,8,8a) for the generation of electrical signals, in particular voltage differentials, proportional to the measured intensities of reflection.

4. Device according to one of the claims from 1 to 3, characterised in that said optical sensor (2) comprises a lamp (11), i.e. a source of visible radiation, which illuminates the surfaces of the three portions (3,4,4a) while the vehicle travels, and in that said receivers (7,8,8a) measure the intensity of reflection of the radiation emitted by the lamp (11).

5. Device according to one of the claims from 1 to 3, characterised in that said optical sensor (2) comprises a transmitter (11') of infrared electromagnetic waves, which irradiates the surfaces of the three portions (3,4,4a) while the vehicle travels, and in that said receivers (7,8,8a) measure the intensity of reflection of the infrared radiation emitted by the transmitter (11').

6. Device according to one of the claims from 1 to 3, characterised in that said optical sensor (2) comprises a transmitter (11'') of ultraviolet electromagnetic waves, which illuminates the surfaces of the three portions (3,4,4a) while the vehicle travels, and in that said receivers (7,8,8a) measure the intensity of reflection of the ultraviolet radiation emitted by the transmitter (11'').

7. Device according to one of the claims from 1 to 6, characterised in that said processing and control unit (5) comprises an adjustment element (12), able to be activated manually by the driver, to set the threshold value.

8. Device according to one of the claims from 1 to 6, characterised in that the operation of the turn indicators when the vehicle is passing other vehicles or making a turn disables the alarm element (6).

9. Device according to one of the claims from 1 to 6, characterised in that said processing and control unit (5) comprises a reset button (13) for the alarm element (6).

10. Device according to one of the claims from 1 to 6, characterised in that the optical sensor (2) is positioned on the axles of the wheels, in proximity to the wheel on the right side of the vehicle.

11. Device according to one of the claims from 1 to 6, characterised in that the maximum value among all the values measured by the receivers in a time interval is evaluated and in that if one of the receivers fails for four consecutive times to reach a value exceeding 70% of the maximum value, a malfunction signal is emitted.
